# EUROPEAN PATENT APPLICATION

(11) **EP 4 600 778 A1**
(43) Date of publication of application: **13.08.2025**
(21) Application number: 25156183.3
(22) Date of filing: 06.02.2025
(51) Int. Cl.: G06F 1/16, H04M 1/02

(54) **SCREWLESS ENGAGEMENT ASSEMBLY**

(30) Priority: 12.02.2024 US 202418438853
(71) Applicant: Lenovo (Singapore) Pte. Ltd., New Tech Park 556741 (SG)
(72) Inventor: YEBKA, Bouziane, Morrisville (US); WONG, Tin-Lup, Morrisville (US); JAKES, Philip J., Morrisville (US)
(74) Representative: Openshaw & Co.

(57) **Abstract**

In one aspect, a device (320) includes one or more elements that are configured to screwlessly and removably engage a component (300) of the device (320) with a housing (310) of the device (320). The device (320) may include the component (300) itself.

## Description

### FIELD

The disclosure below relates to technically inventive, non-routine solutions that produce concrete technical improvements. In particular, the disclosure below relates to screwless engagement assemblies for electronic devices.

### BACKGROUND

As recognized herein, removable battery packs are sometimes used in laptop computers and other devices. However, when these battery packs are removed and then reinstalled in the device in the field, the relatively small screws used to secure the pack to the device can become dislodged and drop down into the chassis of the device. There, the screws might not be retrievable but can still get wedged between the battery pack and rest of the device when the pack is reinstalled. Not only does this interfere with proper placement of the battery pack within the device, but this can also create a pressure point between the battery pack and chassis at the location of the wedged screw. This in turn can lead to safety hazards and device inoperability due to battery pack ruptures that can be caused by the pressure point. No adequate solutions currently exist for the foregoing problems.

### SUMMARY

Accordingly, in one aspect a device includes one or more elements configured to screwlessly and removably engage a component of the device with a housing of the device.

In one example embodiment, the one or more elements may include one or more bays into which respective protrusions on the component are slidable. If desired, the one or more bays may include a first bay on the housing, where the first bay may be configured to receive a first protrusion on the component. The one or more elements may also include a slider on the housing that is configured to slide into a second bay on the component.

Also in one example embodiment, the one or more elements may include one or more protrusions configured to engage respective clips on the component. In certain specific examples, the one or more protrusions may be one or more first protrusions and the one or more elements may include one or more bays into which respective second protrusions on the component are slidable. Also in certain examples, the device may include the component and each respective clip on the component may be established at least in part by a U-shaped member. The U-shaped member may be configured to flex inward to disengage the respective clip from the respective protrusion.

Further, in one example embodiment the one or more elements may include a first tooth configured to interlock with a second tooth on the component. In certain specific examples, the device may include the component and the first and second teeth may be disengageable from each other through a first opening on the housing and a second opening on the component. Each respective opening may be independently usable to disengage the first and second teeth from each other. Additionally, if desired the respective openings may be configured to receive a tool inserted into the respective opening manually. The respective openings may have respective long axes that are orthogonal to each other.

Still further, in an example embodiment, the one or more elements may include a socket. In one specific example, a ball on the component is receivable in the socket. In another specific example, a member on the component is receivable in the socket, with the socket in this particular instance including a first area configured to receive a convex surface of the member and including a second area configured to receive a rectangular protrusion of the member.

Also in an example embodiment, the one or more elements may include a fastener configured to receive a retainer on the component.

In an example embodiment, the one or more elements may include first and second convex members configured to engage respective oblique surfaces on the component. If desired, the first and second convex members may be established by respective first and second leaf springs that engage the respective oblique surfaces under spring bias.

In various examples, the device may include the component. The component may be a battery and/or a memory card.

In another aspect, a method includes providing a device and providing one or more elements on the device. The one or more elements are configured to screwlessly and removably engage a component of the device with a housing of the device.

In some examples, the method may also include screwlessly and removably engaging the component with the housing using the one or more elements.

In another aspect, an assembly configured to engage a housing of a device includes one or more elements configured to screwlessly and removably engage the assembly with the housing of the device.

The details of present principles, both as to their structure and operation, can best be understood in reference to the accompanying drawings, in which like reference numerals refer to like parts, and in which:

### BRIEF DESCRIPTION OF THE DRAWINGS

Figure 1 is a block diagram of an example system consistent with present principles;
Figure 2 is a bottom plan view of an example laptop computer consistent with present principles;
Figures 3A and 3B show a first example screwless embodiment consistent with present principles;
Figures 4A and 4B show a second example screwless embodiment consistent with present principles;
Figures 5A and 5B show a third example screwless embodiment consistent with present principles;
Figures 5C and 5D show a fourth example screwless embodiment consistent with present principles;
Figures 6A and 6B show a fifth example screwless embodiment consistent with present principles;
Figures 7A and 7B show a sixth example screwless embodiment consistent with present principles;
Figures 8A and 8B show a seventh example screwless embodiment consistent with present principles;
Figures 9A and 9B show an eighth example screwless embodiment consistent with present principles;
Figures 10A-14 show a ninth example screwless embodiment consistent with present principles;
Figures 15A and 15B show a tenth example screwless embodiment consistent with present principles;
Figure 16 shows a flowchart of an example method consistent with present principles;
Figure 17 shows two side views of an example rounded screw to demonstrate another embodiment consistent with present principles;
Figure 18 shows top plan views of various screw head designs that may be used for a rounded screw consistent with present principles; and
Figure 19 shows top plan and side views of an example rounded screw with various markings to demonstrate rounded screw features consistent with present principles.

### DETAILED DESCRIPTION

Among other things, the detailed description below provides screwless-based securing solutions for batteries and other components of a device, such as network cards, SID cards, peripheral devices, modular USB ports, etc. For batteries in particular, principles below may increase battery safety by providing enhanced mechanical strength solutions that also eliminate use of screws, provide device integrity, and provide ease of serviceability for replacement or recycling. Example embodiments described below may also save space within the device that might otherwise be used for securing the component to the device. The example screwless embodiments described below may be combined with each other and interchanged consistent with present principles.

Prior to delving further into the details of the instant techniques, note with respect to any computer systems discussed herein that a system may include server and client components, connected over a network such that data may be exchanged between the client and server components. The client components may include one or more computing devices including televisions (e.g., smart TVs, Internet-enabled TVs), computers such as desktops, laptops and tablet computers, so-called convertible devices (e.g., having a tablet configuration and laptop configuration), and other mobile devices including smart phones. These client devices may employ, as non-limiting examples, operating systems from Apple Inc. of Cupertino CA, Google Inc. of Mountain View, CA, or Microsoft Corp. of Redmond, WA. A Unix^{®} or similar such as Linux^{®} operating system may be used, as may a Chrome or Android or Windows or macOS operating system. These operating systems can execute one or more browsers such as a browser made by Microsoft or Google or Mozilla or another browser program that can access web pages and applications hosted by Internet servers over a network such as the Internet, a local intranet, or a virtual private network.

As used herein, instructions refer to computer-implemented steps for processing information in the system. Instructions can be implemented in software, firmware or hardware, or combinations thereof and include any type of programmed step undertaken by components of the system; hence, illustrative components, blocks, modules, circuits, and steps are sometimes set forth in terms of their functionality.

A processor may be any single- or multi-chip processor that can execute logic by means of various lines such as address lines, data lines, and control lines and registers and shift registers. Moreover, any logical blocks, modules, and circuits described herein can be implemented or performed with a system processor such as a central processing unit (CPU), a digital signal processor (DSP), a field programmable gate array (FPGA) or other programmable logic device such as an application specific integrated circuit (ASIC), discrete gate or transistor logic, discrete hardware components, or any combination thereof designed to perform the functions described herein. A processor can also be implemented by a controller or state machine or a combination of computing devices. Thus, the methods herein may be implemented as software instructions executed by a processor, suitably configured application specific integrated circuits (ASIC) or field programmable gate array (FPGA) modules, or any other convenient manner as would be appreciated by those skilled in the art. Where employed, the software instructions may also be embodied in a non-transitory device that is being vended and/or provided, and that is not a transitory, propagating signal and/or a signal per se. For instance, the non-transitory device may be or include a hard disk drive, solid state drive, or CD ROM. Flash drives may also be used for storing the instructions. Additionally, the software code instructions may also be downloaded over the Internet (e.g., as part of an application ("app") or software file). Accordingly, it is to be understood that although a software application for undertaking present principles may be vended with a device such as the system 100 described below, such an application may also be downloaded from a server to a device over a network such as the Internet. An application can also run on a server and associated presentations may be displayed through a browser (and/or through a dedicated companion app) on a client device in communication with the server.

Software modules and/or applications described by way of flow charts and/or user interfaces herein can include various sub-routines, procedures, etc. Without limiting the disclosure, logic stated to be executed by a particular module can be redistributed to other software modules and/or combined together in a single module and/ or made available in a shareable library. Also, the user interfaces (UI)/graphical UIs described herein may be consolidated and/or expanded, and UI elements may be mixed and matched between UIs.

Logic when implemented in software, can be written in an appropriate language such as but not limited to hypertext markup language (HTML)-5, Java^{®}/JavaScript, C# or C++, and can be stored on or transmitted from a computer-readable storage medium such as a hard disk drive (HDD) or solid state drive (SSD), a random access memory (RAM), read-only memory (ROM), electrically erasable programmable read-only memory (EEPROM), a hard disk drive or solid state drive, compact disk read-only memory (CD-ROM) or other optical disk storage such as digital versatile disc (DVD), magnetic disk storage or other magnetic storage devices including removable thumb drives, etc.

In an example, a processor can access information over its input lines from data storage, such as the computer readable storage medium, and/or the processor can access information wirelessly from an Internet server by activating a wireless transceiver to send and receive data. Data typically is converted from analog signals to digital by circuitry between the antenna and the registers of the processor when being received and from digital to analog when being transmitted. The processor then processes the data through its shift registers to output calculated data on output lines, for presentation of the calculated data on the device.

Components included in one embodiment can be used in other embodiments in any appropriate combination. For example, any of the various components described herein and/or depicted in the Figures may be combined, interchanged or excluded from other embodiments.

The term "a" or "an" in reference to an entity refers to one or more of that entity. As such, the terms "a" or "an", "one or more", and "at least one" can be used interchangeably herein.

"A system having at least one of A, B, and C" (likewise "a system having at least one of A, B, or C" and "a system having at least one of A, B, C") includes systems that have A alone, B alone, C alone, A and B together, A and C together, B and C together, and/or A, B, and C together, etc.

The term "circuit" or "circuitry" may be used in the summary, description, and/or claims. The term "circuitry" includes all levels of available integration, e.g., from discrete logic circuits to the highest level of circuit integration such as VLSI, and includes programmable logic components programmed to perform the functions of an embodiment as well as processors (e.g., special-purpose processors) programmed with instructions to perform those functions.

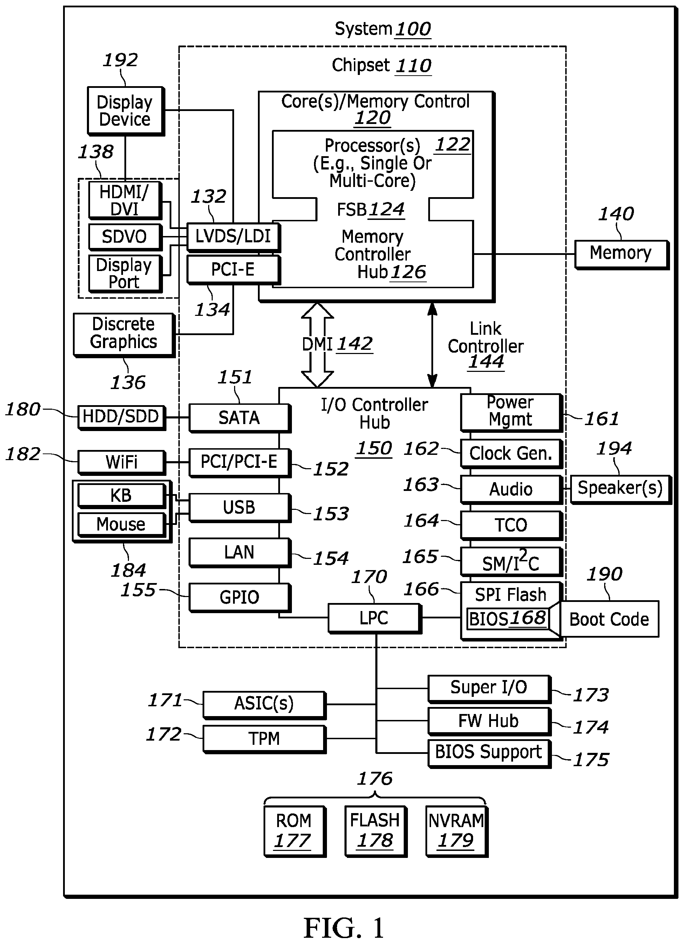

Now specifically in reference to Figure 1, an example block diagram of an information handling system and/or computer system 100 is shown that is understood to have a housing for the components described below. Note that in some embodiments the system 100 may be a desktop computer system, such as one of the ThinkCentre^{®} or ThinkPad^{®} series of personal computers sold by Lenovo (US) Inc. of Morrisville, NC, or a workstation computer, such as the ThinkStation^{®}, which are sold by Lenovo (US) Inc. of Morrisville, NC; however, as apparent from the description herein, a client device, a server or other machine in accordance with present principles may include other features or only some of the features of the system 100. Also, the system 100 may be, e.g., a game console such as XBOX^{®}, and/or the system 100 may include a mobile communication device such as a mobile telephone, notebook computer, and/or other portable computerized device.

As shown in Figure 1, the system 100 may include a so-called chipset 110. A chipset refers to a group of integrated circuits, or chips, that are designed to work together. Chipsets are usually marketed as a single product (e.g., consider chipsets marketed under the brands INTEL^{®}, AMD^{®}, etc.).

In the example of Figure 1, the chipset 110 has a particular architecture, which may vary to some extent depending on brand or manufacturer. The architecture of the chipset 110 includes a core and memory control group 120 and an I/O controller hub 150 that exchange information (e.g., data, signals, commands, etc.) via, for example, a direct management interface or direct media interface (DMI) 142 or a link controller 144. In the example of Figure 1, the DMI 142 is a chip-to-chip interface (sometimes referred to as being a link between a "northbridge" and a "southbridge").

The core and memory control group 120 includes a processor assembly 122 (e.g., one or more single core or multi-core processors, etc.) and a memory controller hub 126 that exchange information via a front side bus (FSB) 124. A processor assembly such as the assembly 122 may therefore include one or more processors acting independently or in concert with each other to execute an algorithm, whether those processors are in one device or more than one device. Additionally, as described herein, various components of the core and memory control group 120 may be integrated onto a single processor die, for example, to make a chip that supplants the "northbridge" style architecture.

The memory controller hub 126 interfaces with memory 140. For example, the memory controller hub 126 may provide support for DDR SDRAM memory (e.g., DDR, DDR2, DDR3, etc.). In general, the memory 140 is a type of random-access memory (RAM). It is often referred to as "system memory."

The memory controller hub 126 can further include a low-voltage differential signaling interface (LVDS) 132. The LVDS 132 may be a so-called LVDS Display Interface (LDI) for support of a display device 192 (e.g., a CRT, a flat panel, a projector, a touch-enabled light emitting diode (LED) display or other video display, etc.). A block 138 includes some examples of technologies that may be supported via the LVDS interface 132 (e.g., serial digital video, HDMI/DVI, display port). The memory controller hub 126 also includes one or more PCI-express interfaces (PCI-E) 134, for example, for support of discrete graphics 136. Discrete graphics using a PCI-E interface has become an alternative approach to an accelerated graphics port (AGP). For example, the memory controller hub 126 may include a 16-lane (x16) PCI-E port for an external PCI-E-based graphics card (including, e.g., one or more GPUs). An example system may include AGP or PCI-E for support of graphics.

In examples in which it is used, the I/O hub controller 150 can include a variety of interfaces. The example of Figure 1 includes a SATA interface 151, one or more PCI-E interfaces 152 (optionally one or more legacy PCIinterfaces), one or more universal serial bus (USB) interfaces 153, a local area network (LAN) interface 154 (more generally a network interface for communication over at least one network such as the Internet, a WAN, a LAN, a Bluetooth network using Bluetooth 5.0 communication, etc. under direction of the processor(s) 122), a general purpose I/O interface (GPIO) 155, a low-pin count (LPC) interface 170, a power management interface 161, a clock generator interface 162, an audio interface 163 (e.g., for speakers 194 to output audio), a total cost of operation (TCO) interface 164, a system management bus interface (e.g., a multi-master serial computer bus interface) 165, and a serial peripheral flash memory/controller interface (SPI Flash) 166, which, in the example of Figure 1, includes basic input/output system (BIOS) 168 and boot code 190. With respect to network connections, the I/O hub controller 150 may include integrated gigabit Ethernet controller lines multiplexed with a PCI-E interface port. Other network features may operate independent of a PCI-E interface. Example network connections include Wi-Fi as well as wide-area networks (WANs) such as 4G and 5G cellular networks.

The interfaces of the I/O hub controller 150 may provide for communication with various devices, networks, etc. For example, where used, the SATA interface 151 and/or PCI-E interface 152 provide for reading, writing or reading and writing information on one or more drives 180 such as HDDs, SSDs or a combination thereof, but in any case the drives 180 are understood to be, e.g., tangible computer readable storage mediums that are not transitory, propagating signals. The I/O hub controller 150 may also include an advanced host controller interface (AHCI) to support one or more drives 180. The PCI-E interface 152 allows for wireless connections 182 to devices, networks, etc. The USB interface 153 provides for input devices 184 such as keyboards (KB), mice and various other devices (e.g., cameras, phones, storage, media players, etc.).

In the example of Figure 1, the LPC interface 170 provides for use of one or more ASICs 171, a trusted platform module (TPM) 172, a super I/O 173, a firmware hub 174, BIOS support 175 as well as various types of memory 176 such as ROM 177, Flash 178, and non-volatile RAM (NVRAM) 179. With respect to the TPM 172, this module may be in the form of a chip that can be used to authenticate software and hardware devices. For example, a TPM may be capable of performing platform authentication and may be used to verify that a system seeking access is the expected system.

The system 100, upon power on, may be configured to execute boot code 190 for the BIOS 168, as stored within the SPI Flash 166, and thereafter processes data under the control of one or more operating systems and application software (e.g., stored in system memory 140). An operating system may be stored in any of a variety of locations and accessed, for example, according to instructions of the BIOS 168.

Additionally, though not shown for simplicity, in some embodiments the system 100 may include a gyroscope that senses and/or measures the orientation of the system 100 and provides related input to the processor assembly 122, an accelerometer that senses acceleration and/or movement of the system 100 and provides related input to the processor assembly 122, and/or a magnetometer that senses and/or measures directional movement of the system 100 and provides related input to the processor assembly 122. Still further, the system 100 may include an audio receiver/microphone that provides input from the microphone to the processor assembly 122 based on audio that is detected, such as via a user providing audible input to the microphone. The system 100 may also include a camera that gathers one or more images and provides the images and related input (e.g., metadata like an image timestamp) to the processor assembly 122. The camera may be a thermal imaging camera, an infrared (IR) camera, a digital camera such as a webcam, a three-dimensional (3D) camera, and/or a camera otherwise integrated into the system 100 and controllable by the processor assembly 122 to gather still images and/or video. Also, the system 100 may include a global positioning system (GPS) transceiver that is configured to communicate with satellites to receive/identify geographic position information and provide the geographic position information to the processor assembly 122. However, it is to be understood that another suitable position receiver other than a GPS receiver may be used in accordance with present principles to determine the location of the system 100.

It is to be understood that an example client device or other machine/computer may include fewer or more features than shown on the system 100 of Figure 1. In any case, it is to be understood at least based on the foregoing that the system 100 is configured to undertake present principles.

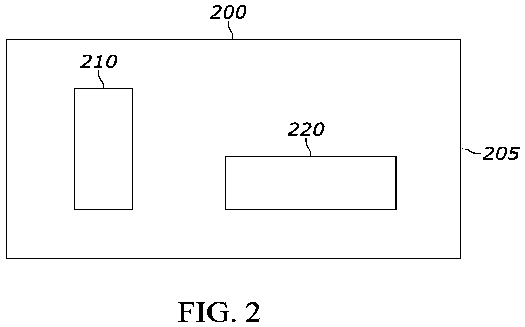

Figure 2 shows a bottom plan view of a bottom panel of a laptop computer 200. However, note that present principles may be used to engage device components with other types (and sides) of devices as well, including desktop computers, smartphones, tablet computers, mixed reality headsets, smart glasses, smart watches, other wearable devices, etc. Present principles may also be used in heavy machinery implementations, automotive implementations, aerospace implementations, freight implementations, and still other implementations.

In any case, here the bottom panel of the laptop 200 may include a keyboard and internal computer circuitry such as a CPU, RAM, a HDD and/or SSD, etc., while a different (upper) panel of the laptop 200 may bear the laptop's display. And as shown in Figure 2, the laptop 200 may include respective components 210, 220. The component 210 may be a secure digital (SD) memory card and the component 220 may be a battery/battery pack that powers the laptop 200.

Consistent with present principles, the components 210, 220 may be screwlessly and removably engaged with the housing 205 of the bottom panel of the laptop 200. When engaged, the components 210, 220 may be closely received into respective bays on the housing 205, with the components 210, 220 then sitting flush with the rest of the bottom surface of the bottom panel. This helps to prevent component/device damage and malfunction that might otherwise result.

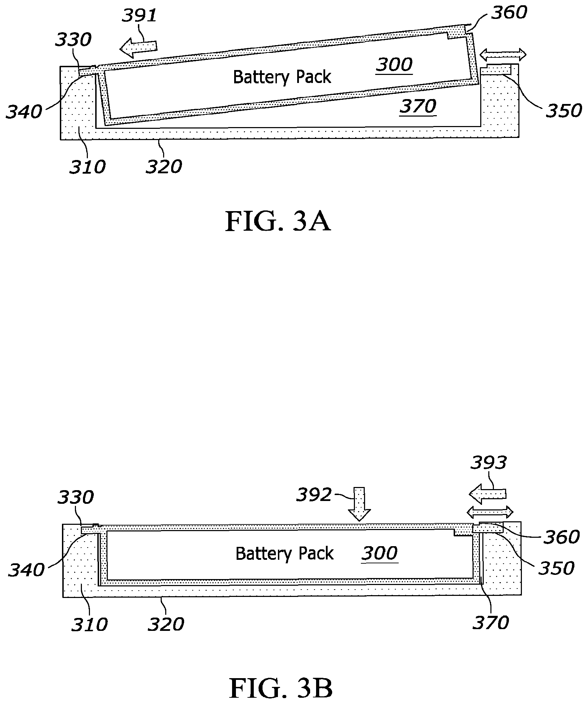

Now in reference to Figures 3A and 3B, a first example embodiment is shown for screwless engagement of a battery pack component 300 with a housing 310 of a device 320 (e.g., the laptop 200). As shown in these figures, the device 320 may include one or more bays into which respective protrusions on the component 300 are slidable, including at least a first bay 330 in the housing 310 into which a protrusion 340 on the component 300 is slidable/receivable. The bay(s) may be established by recesses, notches, rectangular or other openings, indentations, etc. in various examples.

Figures 3A and 3B also show that in some examples, the device 320 may also include a slider 350 on the housing 310. The slider 350 may be a mechanically movable tab or other element that slides along a track on the housing (not shown) to slide into a second bay 360 on the component 300 along a plane parallel to the external face of the component 300/housing 310.

Thus, Figure 3A shows that as a first step in screwlessly engaging the component 300 with the device 320, the protrusion 340 may be extended into the bay 330 with the component 300 positioned at an oblique angle with respect to the component bay 370 in the housing 310 as shown. Arrow 391 illustrates oblique motion inserting the protrusion 340 into the bay 330. The component 300 may then be extended/pressed down fully into the bay 370 as shown in Figure 3B and illustrated by motion arrow 392. Then as a third step, the slider 350 may be subsequently slid into the bay 360, screwlessly securing the component 300 to the device 320 (so that, in the present instance, the battery pack may engage electrical contacts on the device 320 to power the device 320).

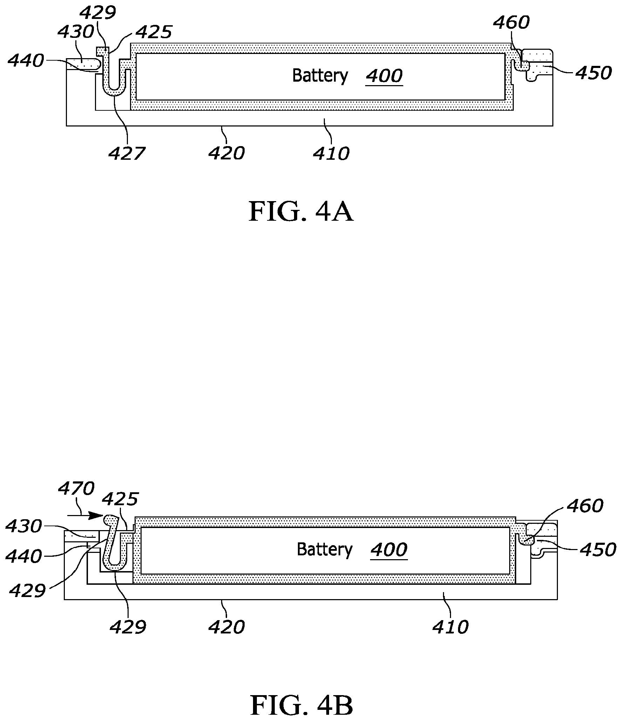

Moving on to Figures 4A and 4B, these figures show another example embodiment for screwless engagement of a battery pack component 400 with a housing 410 of a device 420 consistent with present principles. As shown in these figures, the device 420 may include one or more protrusions configured to engage respective clips 425 on the component 400, including at least a first protrusion 430 formed into the housing 410 and defining a wall of a bay 440 as will be described in more detail below. If desired, the device 420 may also include one or more bays 450 into which a respective second protrusion 460 on the component 400 is slidable.

In the example shown, each respective clip 425 that is used (only one clip 425 being used in the present example) may be established at least in part by a U-shaped member 427. The U-shaped member 427 may be configured to flex transversely inward manually using a person's fingers to disengage the clip 425 from the protrusion 430, as illustrated via the arrow 470 shown in Figure 4B. As also shown in Figures 4A and 4B, a distal vertical arm of the U-shaped member 427 (distal for the component 400) may have a tooth 429 that, when the component 400 is engaged with the housing 410 and the clip 425 exerts outward force under preconfigured spring/material bias, extends into the bay 440. The upper surface of the tooth 429 may thus abut the bottom face of the first protrusion 430 (that establishes a wall of the bay 440 for the tooth 429), screwlessly securing the component 400 to the device 420.

It may therefore be appreciated that according to Figure 4A, the component 400 is screwlessly secured to the housing 410 with the tooth 429 of the clip 425 snapped into the bay 440 to lock the component 400 in the housing 410. Then according to Figure 4B, the component 400 may be disengaged from the housing 410 by pressing the clip 425 inward to remove the tooth 429 from the bay 440 and to angle the clip 425 (and component 400) up away from the first protrusion 430. The user may then slide the second protrusion 460 out of the bay 450 on the other side of the component 400 (with the first end of the component 400 with the clip 425 already being free) to fully remove the component 400 from the housing 410.

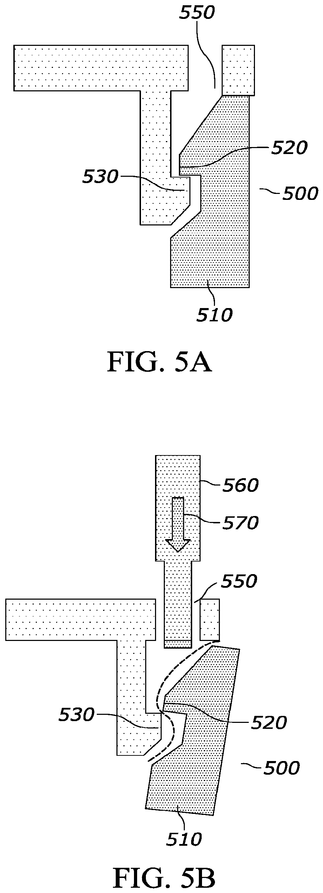

Continuing the detailed description in reference to Figures 5A-5B, yet another example embodiment is shown for screwless snap release of a component with a device consistent with present principles. Specifically, these figures show closeup cutaway side views of an example component/device engagement interface that uses interlocking teeth. As shown, a housing 500 of the device has a vertical member 510 that includes a first tooth 520 configured to interlock with a second tooth 530 on the housing 540 of the removable component (e.g., battery pack).

Figures 5A and 5B also show a single outer side access/opening 550 on the removable component. The teeth 520, 530 may therefore be disengageable from each other through the opening 550, with the opening 550 receiving a tool 560 inserted manually into the opening 550 by a user as illustrated by arrow 570. The tool 560 might be a flat head screwdriver, a frusto-conical or conical-tipped bar, etc., a distal end of which may be inserted into the opening 550. The distal end of the tool 560 may therefore be extended through the opening 550 with pressure then applied to an upper oblique surface of the tooth 520 as shown to overcome material bias and force the tooth 520 away from its interlocked position with the tooth 530 so that the housing 510 (and hence component itself) can be disengaged from the device. This movement is illustrated in Figure 5B (with Figure 5A itself showing the teeth 520, 530 in interlocked configuration).

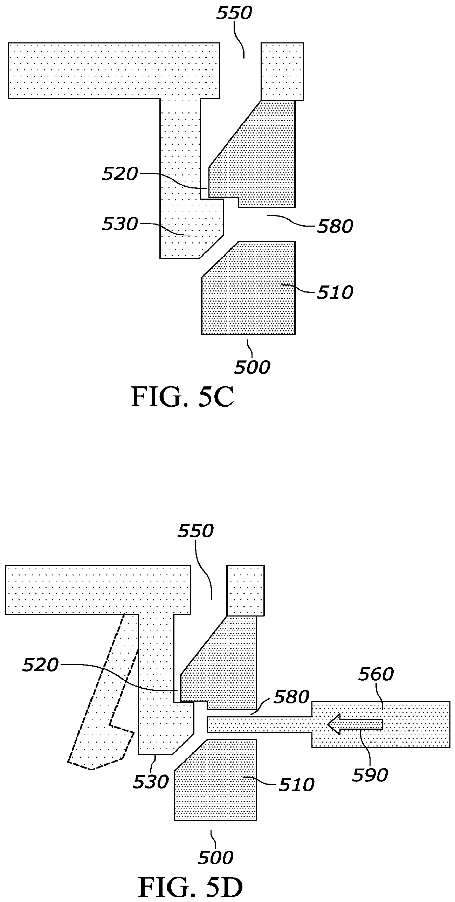

Figures 5C and 5D illustrate a second example where, in addition to having the opening 550 for purposes described above, the housing 510 may also have its own side-access opening 580. The teeth 520, 530 may therefore also be disengaged from each other through this second opening 580, with the opening 580 also configured for receiving the tool 560 as inserted manually into the opening 580 by a user as illustrated by arrow 590. The distal end of the tool 560 may therefore be extended through the opening 580, with pressure then being applied to a portion of the tooth 530 on the component (such as a vertical surface as shown) to overcome material bias and force the tooth 530 away from its interlocked position with the tooth 520 so that the housing 510 (and hence component itself) can be disengaged from the device.

This movement is illustrated in Figure 5D (with Figure 5C showing the teeth 520, 530 in interlocked configuration). It may therefore be appreciated from Figures 5C-5D that each respective opening 550, 580 may be independently usable to disengage the teeth 520, 530 from each other. It may also be appreciated that in the non-limiting example shown, the respective openings 550, 580 may have respective long axes that are orthogonal to each other.

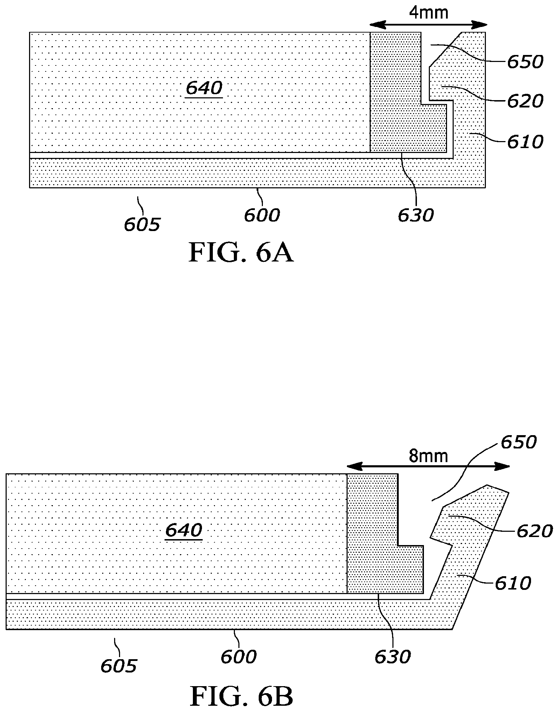

In reference now to Figures 6A and 6B, still another example embodiment is shown for screwless snap release of a component from a device. These figures show close up partial side views of component/device engagement. As shown, a housing 600 of the device 605 has a vertical member 610 that includes a first tooth 620 configured to interlock with a second tooth 630 on the housing of the removable component 640 (e.g., battery pack).

As shown in these figures, a triangular-shaped opening 650 is accessible from outside the housing 600 of the device 605 itself. A tool such as one of the ones described above may be used to insert the distal end of the tool into the opening 650 to abut an oblique upward face of the tooth 620. The tool may then be angled to leverage the tooth 620 and vertical member 610 away from the tooth 630, overcoming material bias and unlocking the teeth 620, 630 from their interlocked configuration (Figure 6A) so that the component 640 may then be removed while the member 610 is extended away from the tooth 630 (Figure 6B). Note that in one non-limiting example, only a mere 4mm of space on the device is taken by the screwless engagement mechanism while locked, and only a mere 8mm of space is used while unlocked.

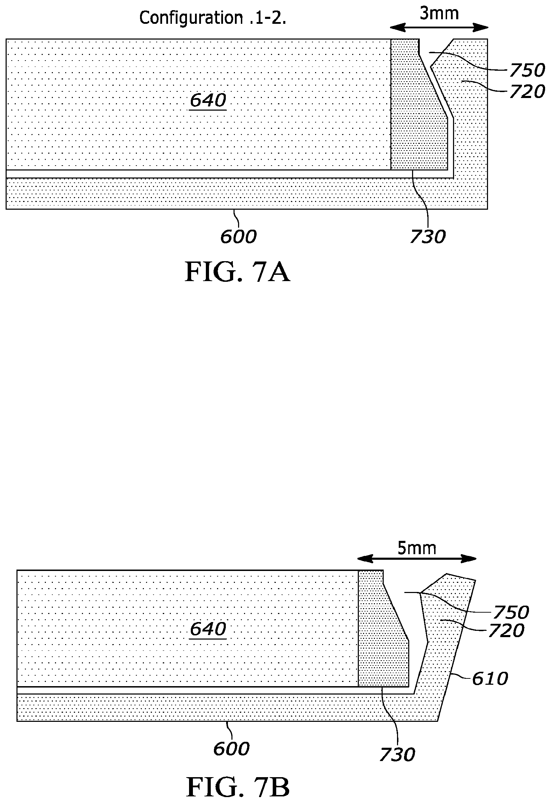

Figures 7A-7B then show another example embodiment similar to Figures 6A-6B save for differences noted next. Specifically, the teeth 720, 730 form an interface of obliquely-oriented interlocking faces as shown, rather than an interface of vertically-interlocking faces per Figures 6A-6B. Additionally, an opening 750 of an irregular shape is shown, as opposed to the opening 650 of right triangle-shape. Nonetheless, a tool may still be used as set forth above to unlock the teeth 720, 730 (Fig. 7B) from their locked position (Fig. 7A). Note that in one non-limiting example, only a mere 3mm of space on the device is taken by the screwless engagement mechanism while locked, and only a mere 5mm of space is used while unlocked.

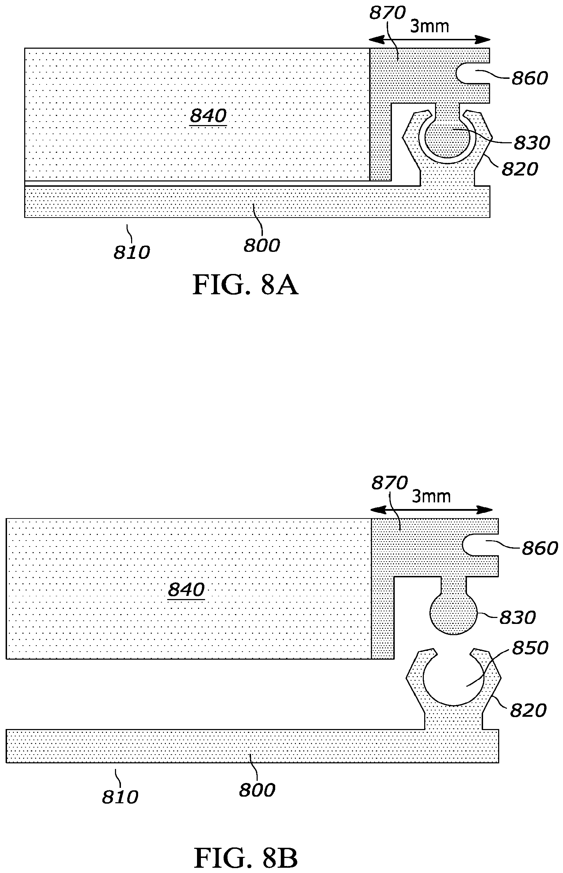

Reference is now made to Figures 8A and 8B, which show another example embodiment for release of a component from a device consistent with present principles. These figures show close up partial side views of component/device engagement. As shown, a housing 800 of the device 810 has a socket 820 into which a ball 830 on a component 840 (e.g., SD memory card) is receivable. As shown, the socket 820 may be semi-spherical, with an opening 850 at the top for the ball to be pressed up against the upper distal ends of the socket 820, forcing those portions of the socket 820 open wider so that the ball 830 may pass therethrough to become seated within the socket 820, screwlessly engaging the component 840 to the device 810. Note that this motion may be effected by inserting a tool into a recess 860 in a vertical face of the housing 870 of the component 840 and then pushing the tool downward to push the ball 830 into the socket. The ball may also be disengaged with the socket by pulling up with the tool instead.

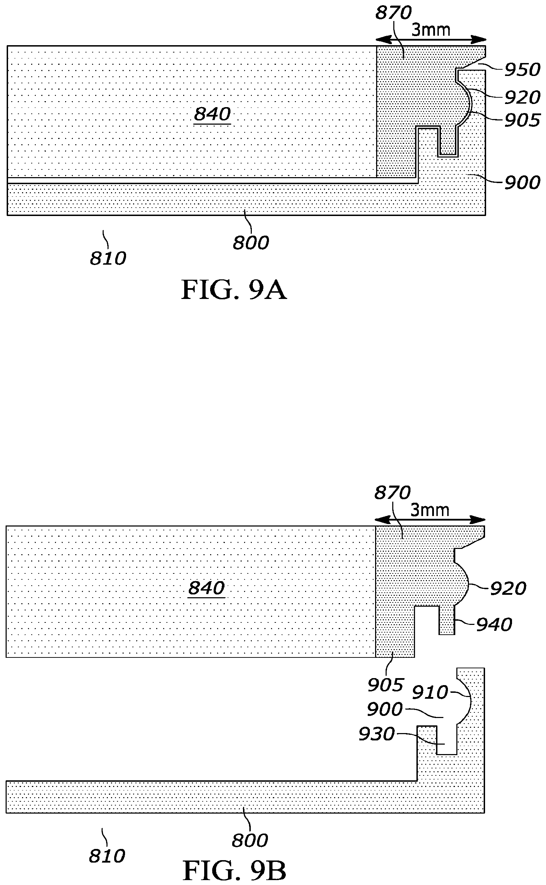

Figures 9A-9B then show another example embodiment similar to Figures 8A-8B save for differences noted next. Specifically, a socket 900 into which a member 905 on the component 840 is receivable may be used instead of the socket 820. The socket 900 may include a first, concave area 910 configured to receive a convex/semispherical surface 920 on the member 905. The socket 900 may also include a second area 930 that is configured to receive a rectangular protrusion 940 of the member 905. This configuration of the interlocking socket 900 and member 905 provides stability from both horizonal and vertical jostling while in the locked configuration (Figure 9A). A tool may then be extended into an opening 950 created between respective faces of the socket 900 and member 905 to pull the housing 870 away from the housing 810 to disengage the component 840 from the device 810 or vice versa.

Note that in one non-limiting example, only a mere 3mm of space on the device is taken by the screwless engagement mechanisms of Figures 8A-9B while locked and unlocked.

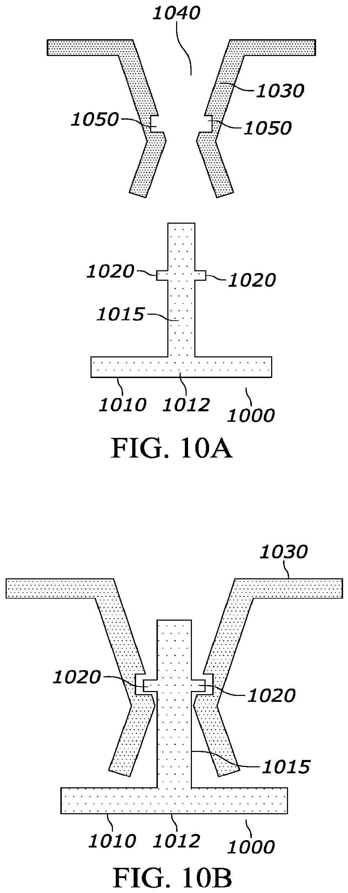

Reference is now made to Figures 10A and 10B, which show another example embodiment for screwless release of a component from a device consistent with present principles. These figures show close up side views of an example retainer clip-type example. As shown in these figures, a housing 1000 of the device (e.g., smartphone) has a fastener 1010. The fastener 1010 has a base 1012. The fastener 1010 also has a vertical post 1015 with horizontally-extending protrusions 1020 thereon. The post 1015 is thus configured to receive a reciprocal retainer 1030 on the component (e.g., battery pack).

Figure 10A therefore shows the elements 1010, 1030 prior to screwless engagement. Figure 10B then shows the screwless, locking engagement itself owing to the components 1010, 1030 being pressed together so that the post 1015 extends into and through the opening 1040 of the retainer 1030 until the protrusions 1020 snap/lock into horizonal openings 1050 in the retainer 1030. A shield retainer/fastener rivet clip/retainer clip-style configuration may thus be used to screwlessly engage the device with the component itself.

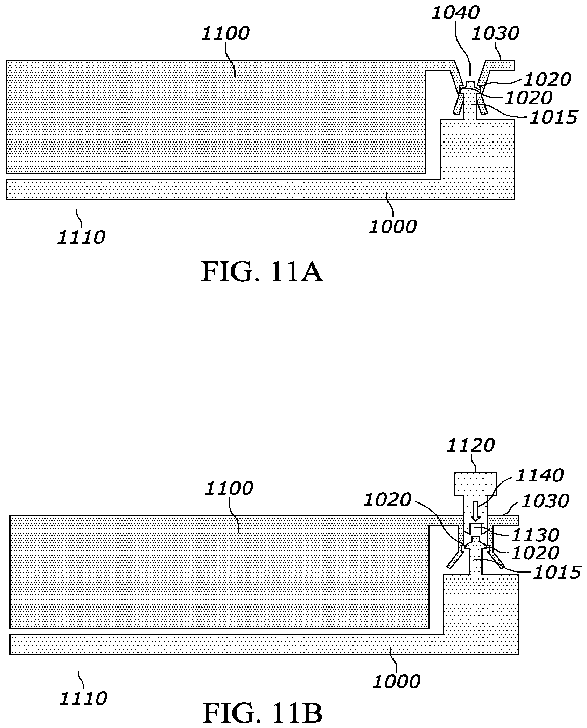

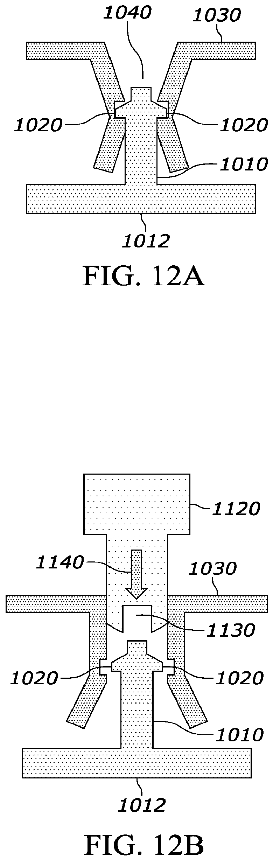

Figures 11A and 11B also show this embodiment in side partial view while Figures 12A-12B show this embodiment in close-up partial view. Figures 11A-12B illustrate the component 1100 being screwlessly engaged (Figs. 11A and 12A) and disengaged (Figs. 11B and 12B) from the housing 1000 of a laptop 1110. Note that to disengage the component 1100 from the laptop 1110, a specially-adapted release tool 1120 may be manually inserted into the upper portion of the retainer 1030 through the opening 1040. This expands the distance between the openings 1050 to free the post 1015 so that a receiver/notch 1130 on a distal end segment of the tool 1120 may then be pushed down over top of the distal end segment of the post 1015. The tool 1120 may then be used to push the post 1015 downward and away from the retainer 1030 to screwlessly disengage the component 1100 from the laptop 1110, as illustrated by arrow 1140.

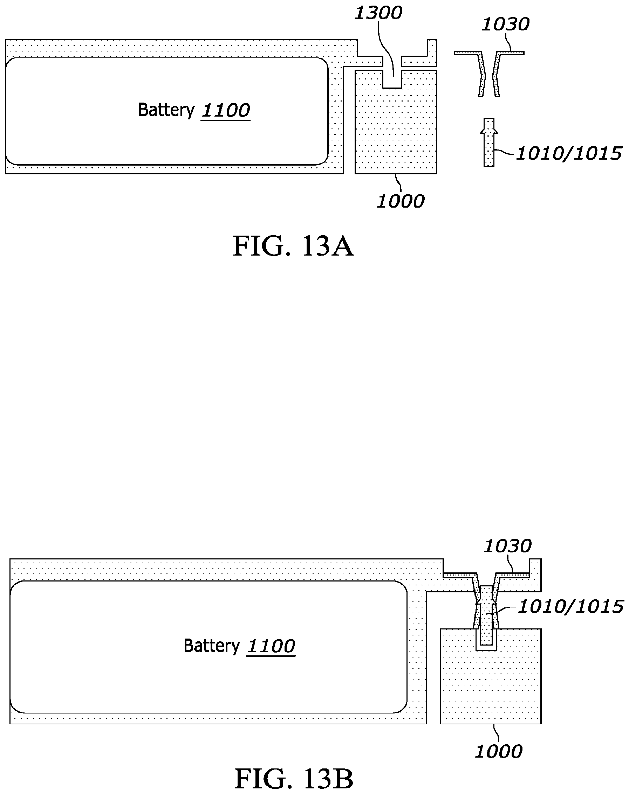

Figures 13A and 13B show an example where the fastener 1010 and retainer 1030 are used in an existing screw hole 1300, with Figure 13A showing the components 1010/1030 prior to engagement with the component 1100 and housing 1000 in the field. The post 1015 may then be glued down into or otherwise coupled to the bottom of the existing screw hole 1300 formed by the housing 1000. The retainer 1030 may be glued onto or otherwise coupled to the component 1100. With this done, the retainer 1030 may then be slid into the screw hole 1300 and over top of the post 1015 to thus screwlessly engage the component 1100 with the housing 1000 of the device, as shown in Figure 13B.

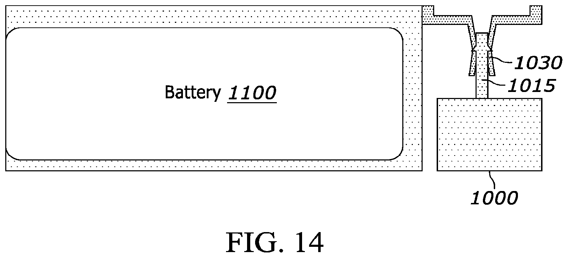

Figure 14 then shows another example where, rather than the components 1010/1015 and 1030 being glued down as described above, the components 1010/1015 and 1030 may be respectively made integrally with the material of the housing of the component 1100 and material of the housing 1000 of the device.

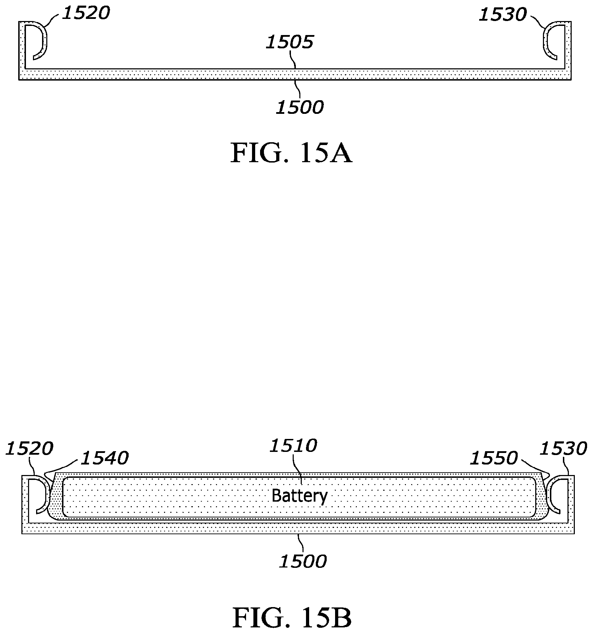

Continuing the detailed description in reference to Figures 15A and 15B, yet another example screwless embodiment is shown. As shown, the housing 1500 of the device (e.g., laptop) may have a receptacle 1505 for receiving a component such as a battery pack 1510. As shown, the housing 1500 may include first and second convex members 1520, 1530 that may be clip fasteners/leaf springs configured to engage respective oblique surfaces 1540, 1550 on the external surface/housing of the battery back 1510, with oblique being relative to vertical.

As shown, the oblique surfaces 1540, 1550 may slope downward and outward. Thus, the battery pack 1510 may be pushed into the receptable 1505 so that the bottom portions of the oblique faces described above are pushed past the clips/springs 1530, which provide spring bias resisting the push. Once fully pushed into the receptacle as shown in Figure 15B, the first and second convex members 1520, 1530 may engage the respective oblique surfaces under spring bias to hold the battery pack 1510 screwlessly and securely within the receptable 1505. To accomplish this, the members 1520, 1530 may be made of spring-memory plastic, metal, and/or hard polymer. To remove the pack, 1510, the members 1520, 1530 may then be pushed against spring bias using a flat head screw driver to free the pack 1510.

It may now be appreciated that example embodiments have been discussed above for a screwless engagement mechanism that can be used for engaging a component with a device (e.g., for electrical connection, mechanical connection, fluid connection, etc.). Thus, an assembly on the component and assembly on the device housing itself may be used for relatively quick and easy screwless engagement and disengagement of the component from the device housing. The elements used to do so may be rigid save for when flex capability is mentioned above, and may be made of material such as aluminum and/or other metal, plastic and other polymers, or other suitable material.

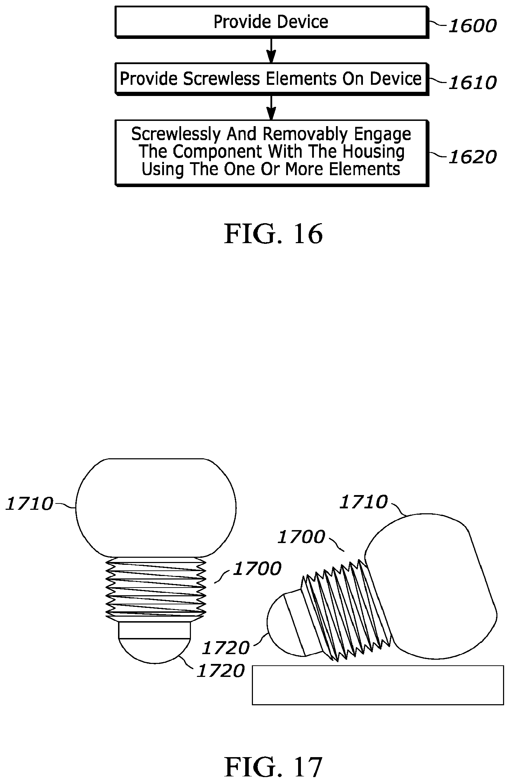

Methods of using such mechanisms are also contemplated consistent with present principles. As such and in reference now to the flow chart of Figure 16, an example method may include providing a device (step 1600) and providing one or more elements on the device that are configured to screwlessly and removably engage a component of the device with a housing of the device (step 1610). In some examples, the method may also include screwlessly and removably engaging the component with the housing using the one or more elements according to one or more the examples above (step 1620). The method may be performed by a device manufacturer, end-user, field technician, etc.

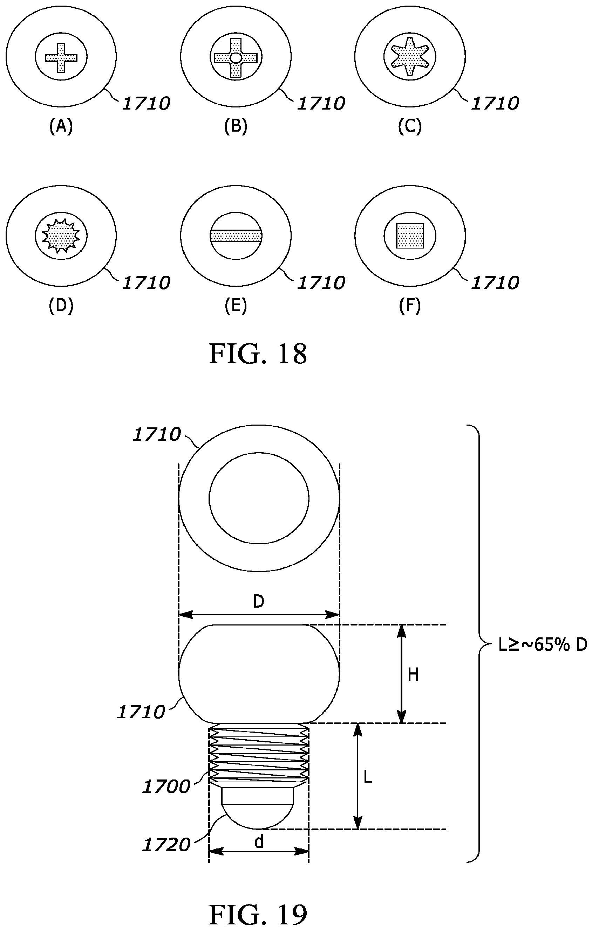

Now in reference to Figures 17 and 18, it is to be understood that while the foregoing screwless embodiments may be used to minimize damage to removable device components as mentioned above, in other examples specialized screws may be used in lieu of standard screw types to engage the component with the device. Figure 17 therefore shows that screws 1700 may be used that have rounded heads 1710 and rounded shaft ends 1720. Thus, if the screw 1700 were lost and became lodged between the component and receptacle in the housing of the device, the rounded nature of the screw reduces the chance of the screw puncturing the component or device housing, which might otherwise result in device damage and a safety hazard.

Figure 18 shows top plan views of the head 1710 with different example tool hole receptables/center drive recesses for receiving a reciprocal distal end of a screwdriver or other tool. Note that the top surface as shown in each example of Figure 18 does not extend to the transverse outer circumference of the head 1710, which would otherwise create non-rounded edges on the top of the head 1710 that might otherwise cause device damage when the screw 1700 gets wedged as described above. As shown in Figure 18, different types of Phillips receptacles may be used (A,B), as may a torx hole (C), spline hole (D), slot/flathead hole (E), and square/Robertson hole (F).

Figure 19 further illustrates and demonstrates an advantage of the configuration of the screw 1700. Specifically, when the length L of the screw shaft is greater than or equal to sixty five percent of the transverse maximum diameter of the screw head 1710, it becomes much harder for the rounded screw 1700 to penetrate the mylars of a battery pack or to penetrate other device components.

Before concluding, note that components included in one embodiment can be used in other embodiments in any appropriate combination. For example, any of the various components described herein and/or depicted in the Figures may be combined, interchanged or excluded from other embodiments.

It is to be understood that whilst present principals have been described with reference to some example embodiments, these are not intended to be limiting, and that various alternative arrangements may be used to implement the subject matter claimed herein. Accordingly, while particular techniques and devices are herein shown and described in detail, it is to be understood that the subject matter which is encompassed by the present application is limited only by the claims.

## Claims

1. A device, comprising:
one or more elements configured to screwlessly and removably engage a component of the device with a housing of the device.

2. The device of Claim 1, wherein the one or more elements comprise at least one bay into which a protrusion on the component is slidable.

3. The device of Claim 2, wherein the at least one bay comprises a bay on the housing, the bay being configured to receive a protrusion on the component, and wherein the one or more elements further comprise a slider on the housing, the slider being configured to slide into a second bay on the component.

4. The device of any of Claims 1 to 3, wherein the one or more elements comprise at least one protrusion configured to engage a clip on the component.

5. The device of Claim 4, wherein the one or more elements comprise at least one bay into which a protrusion on the component is slidable.

6. The device of Claim 4 or Claim 5, comprising the component, the clip on the component being established at least in part by a U-shape member, the U-shape member being configured to flex inward to disengage the clip from the protrusion.

7. The device of any of Claims 1 to 6, wherein the one or more elements comprise a first tooth configured to interlock with a second tooth on the component.

8. The device of Claim 7, comprising the component, wherein the first and second teeth are disengageable from each other through a first opening on the housing and a second opening on the component, each respective opening being independently usable to disengage the first and second teeth from each other.

9. The device of Claim 8, wherein the respective openings are configured to receive a tool inserted into the respective opening manually.

10. The device of Claim 8 or Claim 9, wherein the respective openings have respective long axes that are orthogonal to each other.

11. The device of any of Claims 1 to 10, wherein the one or more elements comprise a socket into which a ball on the component is receivable.

12. The device of any of Claims 1 to 11, wherein the one or more elements comprise a socket into which a member on the component is receivable, the socket comprising a first area configured to receive a convex surface of the member and comprising a second area configured to receive a rectangular protrusion of the member.

13. The device of any of Claims 1 to 12, wherein the one or more elements comprise a fastener, the fastener being configured to receive a retainer on the component.

14. The device of any of Claims 1 to 13, wherein the one or more elements comprise first and second convex members configured to engage respective oblique surfaces on the component; and
optionally the first and second convex members are established by respective first and second leaf springs that engage the respective oblique surfaces under spring bias.

15. An assembly configured to engage a housing of a device, comprising:
one or more elements configured to screwlessly and removably engage the assembly with the housing of the device.
